# EUROPEAN PATENT APPLICATION

(11) **EP 2 530 359 A1**
(43) Veröffentlichungstag der Anmeldung: **05.12.2012**
(21) Anmeldenummer: 11737344.9
(22) Anmeldetag: 17.01.2011
(51) Int. Cl.: F16H 55/08, F16H 1/08

(54) **EXZENTRISCH ZYKLOIDE EINRASTUNG VON ZAHNPROFILEN (VERSCHIEDENE AUSFÜHRUNGSFORMEN)**

(30) Priorität: 29.01.2010 RU 2010103071
(71) Anmelder: Closed Joint Stock Company "Technology Market", Tomsk 634021 (RU)
(72) Erfinder: STANOVSKOY, Viktor Vladimirovich, Tomsk 634063 (RU); KAZAKYAVICHYUS, Sergey Matveevich, Tomsk 634063 (RU); REMNEVA, Tatiana Andreevna, Tomsk 634028 (RU); KUZNETSOV, Vladimir Mikhajlovich, Tomsk 634063 (RU); STANOVSKOY, Alexander Viktorovich, Tomsk 634063 (RU)
(74) Vertreter: Jeck, Anton
(86) Internationale Anmeldenummer: PCT/RU2011/000011
(87) Internationale Veröffentlichungsnummer: WO 2011/093743

(57) **Zusammenfassung**

Die Exzenter-Zykloidenverzahnung der Zahnprofile bezieht sich auf mechanische Getriebe zur Umsetzung einer Drehbewegung in eine Dreh- bzw. in eine hin- und hergehende Bewegung. Die Exzenter-Zykloidenverzahnung kann in Stirnradgetrieben, Kegelgetrieben bzw. Planetengetrieben sowie in Zahnstangengetrieben mit einer hohen Übersetzung, kleinen Abmessungen und einer hohen Belastbarkeit eingesetzt werden. Eines der Profile stellt ein Rad (1) mit einem Schraubenzahn (2) dar. Der Arbeitsteil des Schraubenzahns (2) in Hauptschnitten ist mit Bögen (6 und 7) eines Kreises (8) umschrieben, der in Bezug auf die Drehachse (OO1) des Rades (1) exzentrisch (e) versetzt ist. Die Arbeitsgegenfläche der Zähne (13) des zweiten Profils in Hauptschnitten ist durch die Abschnitte der Flanken (14, 15) einer Zykloide (16) umschrieben. Die Spitzen (17) und die Zahnlücken der Zykloidzähne sind von Bögen der koaxialen Kreise (19 und 21) umschrieben. Eine solche Ausführung der Profile ermöglicht es, die Oberfläche, die eine hochpräzise Bearbeitung voraussetzt, wesentlich zu verkleinern.

## Beschreibung

Die Erfindung betrifft eine Exzenter-Zykloidenverzahnung von Zahnprofilen mit Kurvenzähnen nach dem Oberbegriff des Anspruchs 1.

Die Erfindung ist in mechanischen Getrieben zur Umsetzung der Drehbewegung in eine Dreh- bzw. in eine hin- und hergehende Bewegung unter Einsatz einer Profilverzahnung einsetzbar. Sie kann in Stirnradgetrieben, Kegeltrieben bzw. Planetengetrieben sowie in Zahnstangengetrieben mit einer hohen Übersetzung, kleinen Abmessungen und einer hohen Belastbarkeit eingesetzt werden.

Die in Radgetrieben breit angewendete Evolventenverzahnung hat bestimmte Vorteile aber auch einige Mängel: eine geringe Belastbarkeit, die durch die Zahngröße festgelegt ist, sowie eine begrenzte in einer Stufe Übersetzung.

In der Praxis ist die Übersetzung des einstufigen Getriebes nur selten höher als 7. Um die Belastbarkeit der Evolventenverzahnung zu steigern, muss der Zahnmodul vergrößert werden. Dies führt zu einer ungerechten Vergrößerung der Abmessungen des Getriebes.

Aus dem Stand der Technik ist eine Exzenter-Zykloidenverzahnung der Räder mit Kurvenzähnen bekannt (s.: V.V. Stanovskoy, S.M. Kazakiavichus und andere. Neue Verzahnungsart für Räder mit Kurvenzähnen. Handbuch. Ingenieurzeitschrift, Heft 9, 2008. S. 34 - 39). Das Zahnprofil des kleineren Rades stellt im Stirnschnitt einen Kreis dar. Der Kreis ist zur Raddrehachse exzentrisch versetzt. Das heißt, das Rad hat einen Zahn, dessen Form einen exzentrischen Kreis darstellt. Das krummlinige Schraubenprofil des Rades ist durch eine konsequente und ununterbrochene Verschiebung dieses Kreises entlang der Radachse und seine gleichzeitige Drehung um diese Achse bedingt.

Das Zahnprofil des größeren Rades im Stirnschnitt passt mit dem exzentrisch versetzten Kreis des kleineren Rades zusammen. Das Profil ist als eine Hülllinie der Gruppe von Exzenterkreisen in verschiedenen Verzahnungsphasen aufgebaut und stellt eine Rollkurve dar. Die Rollkurve ist eine Äquidistante der Epitrochoide. Die krummlinige Schraubenoberfläche der Zähne des zweiten Rades ist ähnlich durch die konsequente und ununterbrochene Drehung der Zykloidenstirnschnitte um die Radachse gebildet. Die Zahnprofile der Räder passen in jedem Stirnschnitt zusammen und haben gleichzeitig eine Menge von Kontaktstellen. Diese Kontaktpunkte bilden eine ununterbrochene Kontakt-Schraubenlinie aus.

Wird ein beliebiger Stirnschnitt der Verzahnung getrennt betrachtet, so ist es offensichtlich, dass der Kraftkontakt der Profile in jedem Stirnschnitt auf einem Abschnitt vorliegt, der kleiner als die halbe Umdrehung des Schraubenexzenters ist. Dementsprechend wird die Drehung von den Abschnitten in der Nähe der Zipfel der Zykloidenkurve im Falle der Zykloide nicht übertragen. Die Arbeitsabschnitte sind nur die Abschnitte in den aufsteigenden Flanken der Zykloide.

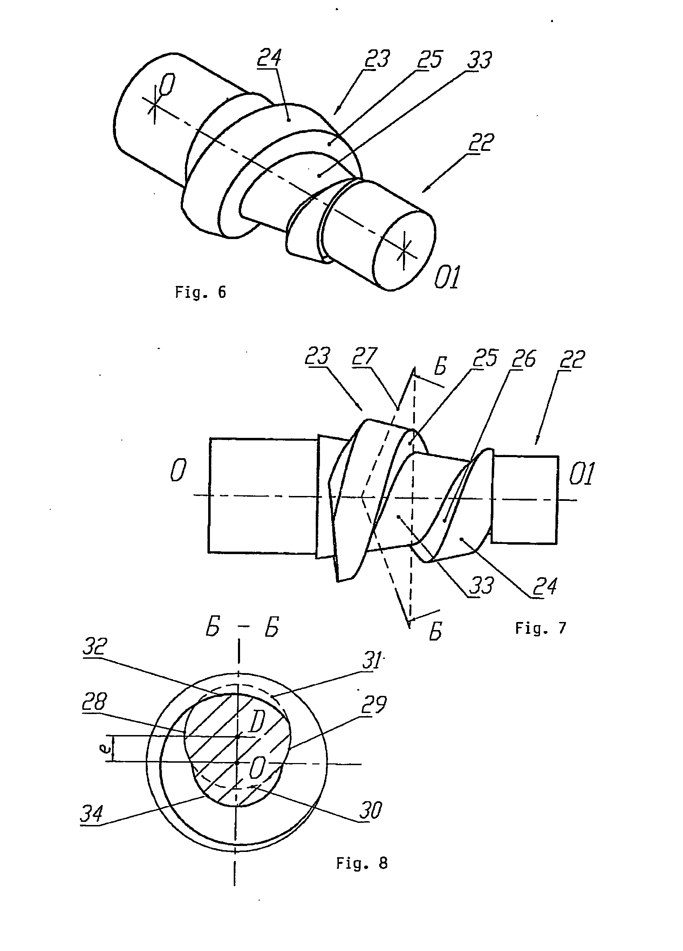

Aus dem Stand der Technik ist auch eine Exzenter-Zykloidenverzahnung mit zusammengesetzten Rädern bekannt (s. ebenda, Fig. 8). Die Räder dieser Verzahnung bestehen aus mehreren gleichen Zahnkränzen, die zueinander um den gleichen Winkel gedreht sind. Das kleinere Rad in der Verzahnung hat einen Zahn, dessen Profil im Stirnschnitt jedes Kranzes von einem Kreis umschrieben ist. Dabei ist dieser Kreis zur Radachse exzentrisch versetzt. Das größere Rad besteht aus Kränzen mit einem Zykloidprofil, die zueinander um einen Winkel gedreht sind. Der Winkel ist mit dem Teilwinkel des Kranzes geteilt durch die Anzahl der Kränze gleich. Jeder der Kränze des größeren Rades passt mit dem entsprechenden Kranz des kleineren Einzahnrades zusammen. Eine solche Verzahnung sorgt für ein Übersetzungsverhältnis, welches mit der Periodenzahl der Zykloide, d. h. mit der Anzahl der Zähne des größeren Rades gleich ist. Die Verzahnung ermöglicht es, in einer Stufe eine Übersetzung bis 40 - 50 zu erreichen. Darüber hinaus weist diese Verzahnung bei gleicher Rädergröße eine erhöhte Belastbarkeit im Vergleich zur Evolventenverzahnung auf. Bei gleicher Belastbarkeit ist sie aber kompakter ausgebildet.

Durch das Patent RU 2362925 ist auch der Einsatz dieses Systems einer Exzenter-Zykloidenverzahnung in einem Zahnstangengetriebe bekannt. Dabei kann im Getriebe sowohl eine Verzahnung mit Kurvenzähnen als auch eine Verzahnung mit zusammengesetzten Profilen angewendet werden. Das Zahnstangengetriebe mit der Exzenter-Zykloidenverzahnung unterscheidet sich von einer ähnlichen Verzahnung der Räder nur dadurch, dass das Zykloidprofil auf der Zahnleiste ausgebildet ist.

Die Herstellung der Exzenter-Zykloidenverzahnung der Profile setzt die Anwendung moderner Bearbeitungszentren voraus. Dabei hat die Verzahnung mit Kurvenzähnen eine sehr große Bearbeitungsfläche und bedarf großer Maschinenlaufzeiten. Die Zahnkränze für die Verzahnung der zusammengesetzten Zahnprofile werden separat gefertigt und dann zusammengebaut. Das erschwert und verteuert das Herstellungsverfahren und vermindert die Genauigkeit des Profils.

Es ist Aufgabe der Erfindung, eine Exzenter-Zykloidenverzahnung für ein einfacheres Fertigungsverfahren zu entwickeln.

Die gestellte Aufgabe ist durch die Merkmale des Anspruchs 1 gelöst.

Der technische Effekt der Erfindung ist eine Verkleinerung der Oberfläche, die einer präzisen Bearbeitung bedarf. Ein zusätzliches Ergebnis für die Verzahnung der zusammengesetzten Profile ist eine Erhöhung Genauigkeit und der Leistungsfähigkeit bei ihrer Fertigung dank der Herstellung des zusammengesetzten Profils aus einem Werkstück in Form eines Bauteils.

Die gestellte Aufgabe wird bei Zahnprofilen mit Kurvenzähnen wie folgt gelöst:

Eines der Profile der Exzenter-Zykloidenverzahnung ist auch wie beim Prototyp mit einem Schraubenzahn ausgebildet. Im Unterschied zum Prototyp ist der Arbeitsteil des Zahns in Hauptprofilschnitten durch die Bögen des Kreises umrissen, der zur Drehachse exzentrisch versetzt ist.

Die Arbeitsgegenfläche der Zähne des zweiten Profils in den Stirnschnitten ist durch die Abschnitte der Flanken einer Zykloide umschrieben. Die übrigen Zahnabschnitte beider Profile können eine beliebige Form aufweisen. Die einzige Bedingung ist, dass sie sich während der Arbeit nicht überschneiden. Bei einer solchen Profilform ist eine Präzisionsbearbeitung nur für die Arbeitsabschnitte erforderlich. Dadurch kann die für die Herstellung der Profile benötigte Zeit beachtlich verkürzt werden.

Die genannte Art der Verzahnung ist in verschiedenen Verzahnungen (Außen- und Innenverzahnung) für Räder mit verschiedener Form (Stirnräder und Kegelräder) sowie als Zahnstangenverzahnung realisierbar.

Die Hauptschnitte der Stirnräder sind ihre Stirnschnitte. Der Hauptschnitt bei einer Zahnstangenverzahnung ist der Schnitt mit einer Ebene, die senkrecht zur Radachse und parallel zur Zahnstange verläuft. Die Hauptschnitte der Kegelräder sind die Schnitte mit einem zusätzlichen Kegel.

Bei einer Kegelverzahnung ist auch eine andere Ausgestaltung der Verzahnung möglich. Die Zähne haben in diesem Fall in den von einer Sphäre gebildeten Querschnitten die oben beschriebene Form, wobei der Mittelpunkt im Schnittpunkt der Radachsen liegt. D. h., der Arbeitsteil des Zahns des kleineren Rades ist in diesem kugelförmigen Querschnitt durch die Bögen der exzentrisch versetzten Kreise umschrieben. Die Arbeitsgegenfläche der Zähne des zweiten Profils im kugelförmigen Querschnitt ist durch die Abschnitte der Flanken einer Zykloide umschrieben. Mit anderen Worten: Die Zahnprofile im Hauptschnitt der Räder sind Abschnitte eines in der Sphäre ausgebildeten exzentrischen Kreises sowie Abschnitte einer Kugelzykloide.

Bei zusammengesetzten Zahnprofilen ist die Aufgabe wie folgt gelöst. Jedes Profil der Exzenter-Zykloidenverzahnung ist wie beim Prototyp in Form von einem Paket mit wenigstens drei Zahnkränzen ausgebildet. Die Zahnkränze sind miteinander fest verbunden und um einen gleichen Winkel zueinander verdreht. Die Kränze eines der Profile sind mit einem Zahn ausgebildet. Im Unterschied zum Prototyp ist der Arbeitsteil des Zahns dieses Profils im Stirnschnitt von den Bögen des zur Radachse exzentrisch versetzten Kreises umschrieben. Die Arbeitsgegenfläche der Zähne des zweiten Profils im Stirnschnitt ist durch die Abschnitte der Flanken einer Zykloide umschrieben. Die Zahnspitzen und die Zahnlücken bei zusammenpassenden Profilen können eine beliebige Form, allerdings ohne Überschneidungen, aufweisen. Diese Profilform vermindert auch die Fläche für eine hochpräzise Bearbeitung. Sie ermöglicht auch, jedes der Profile in Form eines Bauteils aus einem Werkstück herzustellen.

Die Erfindung wird anhand der Zeichnungen näher erläutert. Es zeigen:
- Fig. 1 bis 5 -: Außenverzahnungen der Stirnräder,
- Fig. 1 -: Gesamtansicht des kleineren Rades dieser Verzahnung,
- Fig. 2 -: Seitenansicht des gleichen Rades,
- Fig. 3 -: Stirn- bzw. Hauptschnitt dieses Rades,
- Fig. 4 -: Gesamtansicht des größeren Rades der gleichen Verzahnung,
- Fig. 5 -: den Hauptschnitt des großen Rades,
- Fig. 6 bis 11 -: eine der Ausgestaltungen der Verzahnung mit Kegelrädern,
- Fig. 6, 7 und 8 -: die Gesamtansicht, die Draufsicht und den Hauptschnitt des kleineren Kegelrades,

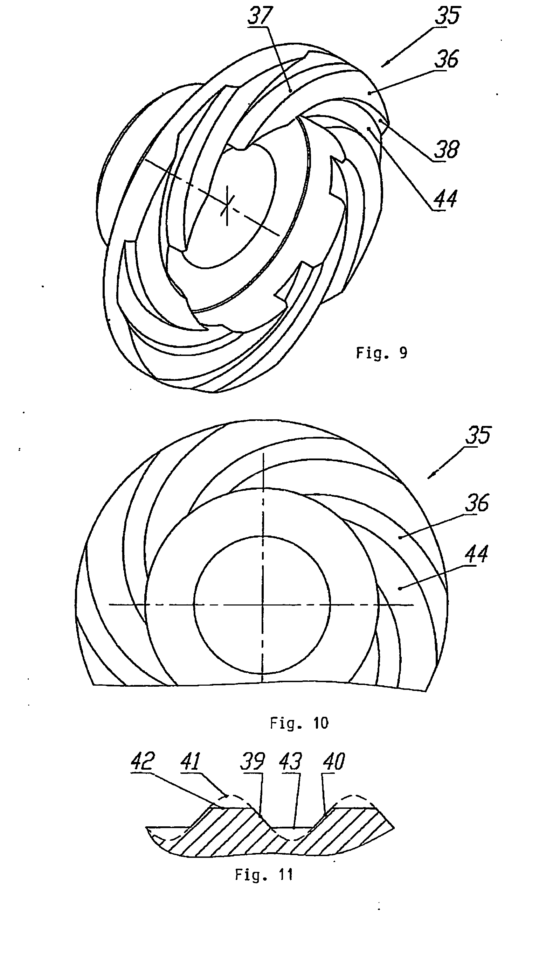

- Fig. 9 und 10 -: verschiedene Arten des größeren Kegelrades dieser Verzahnung,
- Fig. 11 -: den Abschnitt des Radprofils im Querschnitt des Rades beim Schneiden mit einem zusätzlichen Kegel,

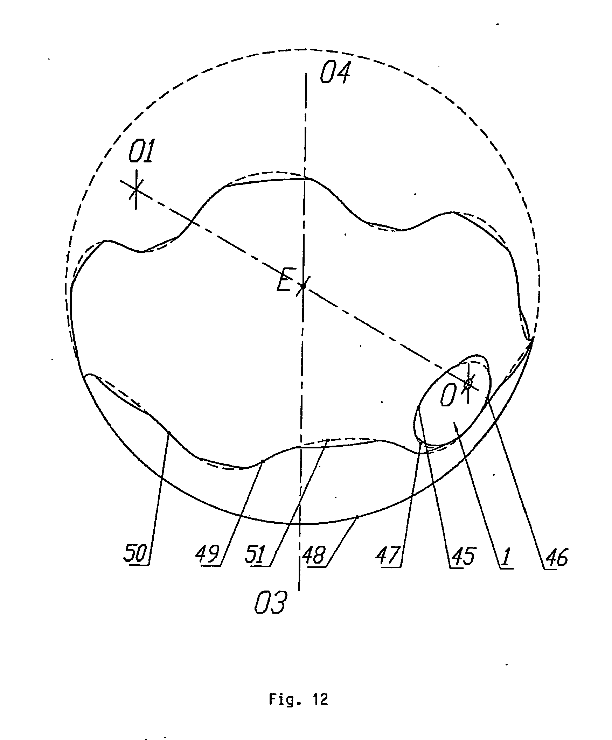

- Fig. 12-: die schematische Darstellung der Ausbildung der Zahnprofile bei einer zweiten Ausgestaltung der Verzahnung mit Kegelrädern,

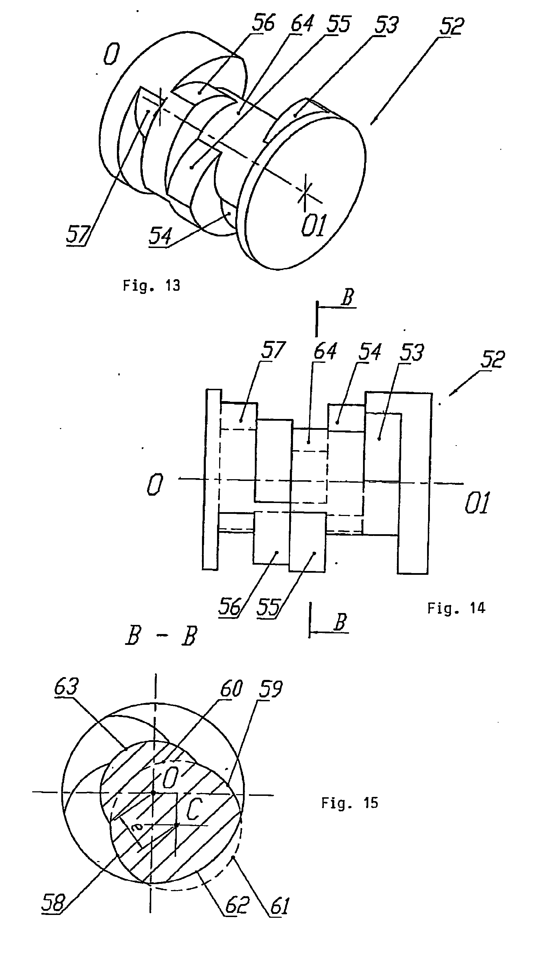

- Fig. 13 bis 17 -: eine Verzahnung mit zusammengesetzten Rädern, die gemäß der Erfindung ausgebildet ist,
- Fig. 13, 14 und 15 -: die Gesamtansicht, die Draufsicht und den Stirnschnitt des kleineren Rades dieser Verzahnung,

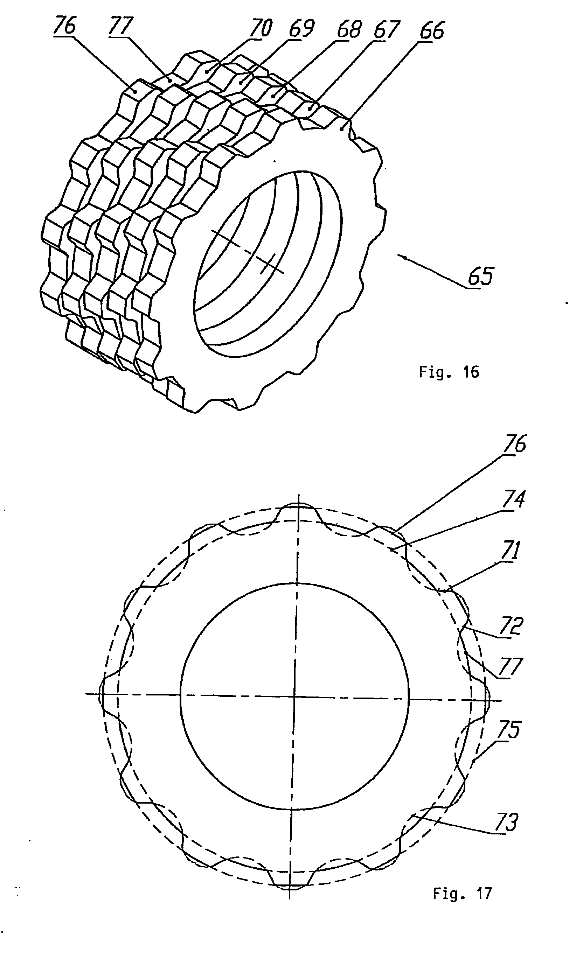

- Fig. 16 und 17 -: die Gesamtansicht und den Stirnschnitt des größeren Rades

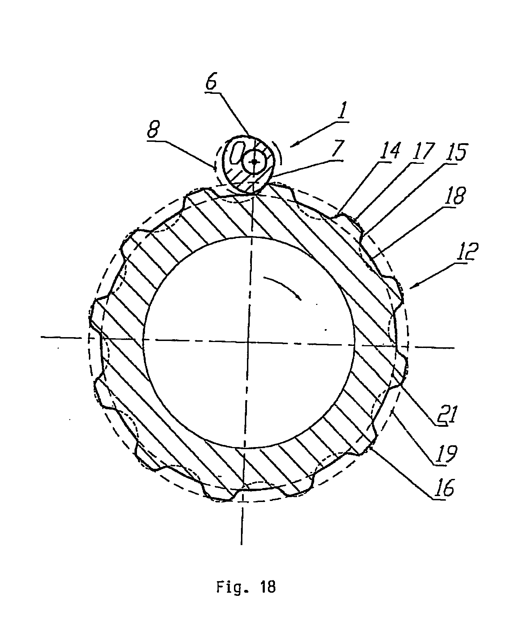

- Fig. 18 -: den Stirnschnitt der zusammenwirkenden Räder.

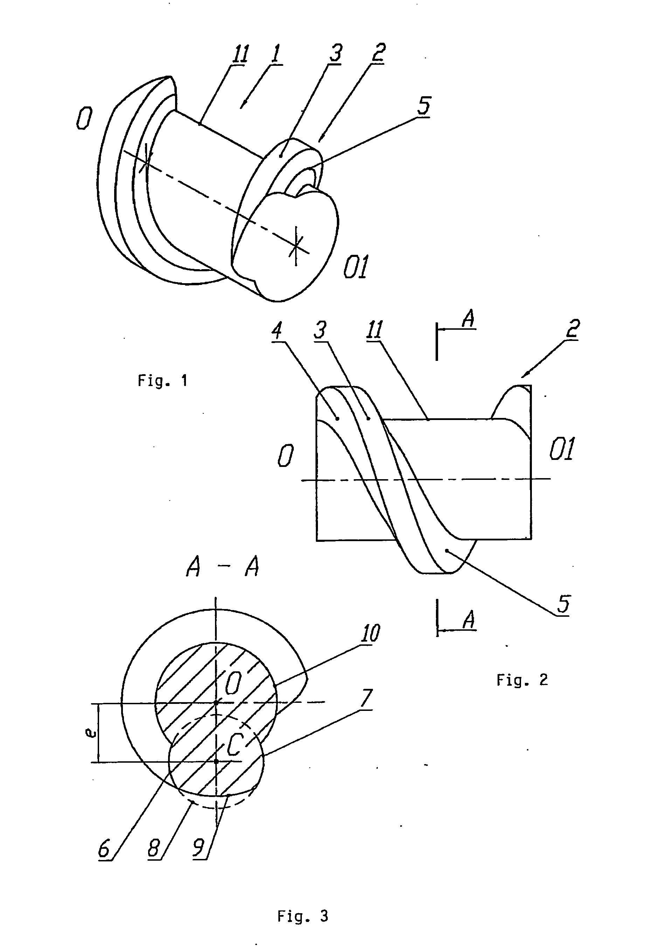

Die vorgeschlagene Verzahnung wird am Beispiel einer Außenverzahnung der Stirnräder nach Fig. 1 - 5 betrachtet. Das kleinere Rad 1 hat einen Schraubenzahn 2. Der Schraubenzahn 2 hat eine durch eine Schraubenoberfläche ausgebildete Spitze 3 und zwei als Arbeitsschraubenflanken ausgebildete Schraubenarbeitsflächen 4 und 5 des Zahns 2. In jedem Stirnschnitt (s. Fig. 3) sind die Arbeitsabschnitte dieses Zahns 2 von Bögen 6 und 7 eines Kreises umschrieben. Dieser Kreis ist in Fig. 3 mit Strichlinien gezeigt. Der Mittelpunkt C des Kreises ist in Bezug auf die Drehachse 0-01 des Rades 1 um eine Exzentrizität e versetzt. Die Bögen 6 und 7 bilden im Schraubenzahn Schraubenarbeitsflächen 4 und 5 aus. Die Abschnitte 8 des Kreises sind im Bereich der maximalen Entfernung von der Drehachse entfernt. Der Bogen des Kreises 9 bildet die Zahnspitze im Querschnitt aus. Dieser Bogen bildet im Schraubenzahn 2 die Schraubenzahnspitze 3 aus. Der Kreis 10 bildet eine Lücke am Zahnfuß im Schnitt und ist koaxial mit der Radachse 0-01. Dieser Kreis 10 bildet eine Zylinderfläche 11 im Rad 2 aus. Die Oberfläche 11 ist gleichzeitig der Körper des Rades 1. Der Radius der Zylinderfläche 11 wird abhängig von der Festigkeit gewählt.

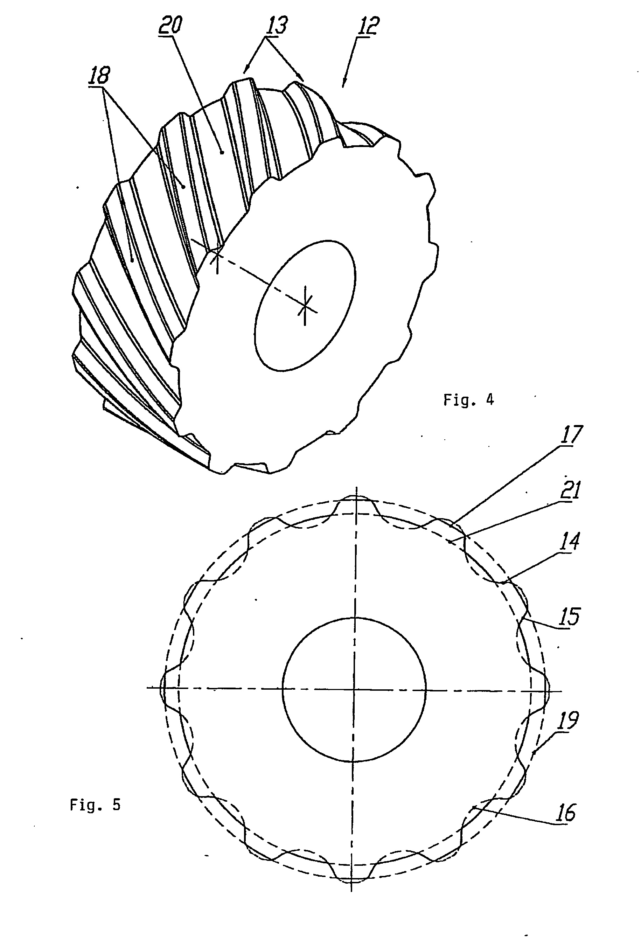

Das größere Rad 12 dieser Verzahnung (s. Fig. 4 und 5) hat eine Spiralverzahnung mit Schraubenzähne 13.

Die Arbeitsabschnitte der Zähne 13 sind im Stirnschnitt durch die Abschnitte der Flanken 14 und 15 der Zykloide 16 ausgebildet, die in Fig. 5 mit Strichlinie eingezeichnet ist. Die Spitzen der Zykloide 16 sind entfernt, und die Spitzen der Zähne 13 bilden im Schnitt Bögen des Kreises 17 und die Bögen des Kreises 17 bilden im Schnitt die Spitze der Zähne 13. Diese Bögen bilden in den Kurvenzähnen 13 Schraubabschnitte 18 aus. Die Schraubabschnitte 18 liegen auf einer Zylinderfläche 19 (diese Oberfläche ist in Fig. 5 mit Strichlinien gekennzeichnet). Die Füße der Zähne 13 sind nicht durch die Lücken der Schraub-Zykloidfläche sondern durch Schraubabschnitte 20 der Zylinderfläche 21 ausgebildet (in Fig. 5 mit Strichlinie gekennzeichnet). Diese Zylinderfläche 21 bildet den Körper des Rades 12 aus. Natürlich müssen die Spitzen 18 der Schraubzähne des größeren Rades 12 für eine normale Funktion der Verzahnung kleiner sein als die ihnen entsprechenden Zahnlücken am Zahnfuß des kleineren Rades 1. Ähnlich muss die Spitze 3 des Schraubzahns des Rades 1 kleiner als die entsprechende Lücke 20 des Zykloidrades 12 sein. In diesem Fall werden die Form und die Bearbeitungsqualität dieser Oberflächen keinen Einfluss auf die Parameter der Verzahnung ausüben.

Eine solche Änderung des Zahnprofils der Räder ist dank bestimmter Besonderheiten der Exzenter-Zykloidenverzahnung möglich. Die computergestützte mathematische Modellvorstellung der Verzahnung hat Folgendes gezeigt: Wenn in der Verzahnung ein Spalt vorhanden ist, kommt der Kraftkontakt darin nur in den Abschnitten der Flanken der Zykloide zustande. Dabei hat die Veränderung des Mittenabstands der Räder nur einen sehr geringen Einfluss auf die Position des Kontaktpunkts auf dem Abschnitt dieser Flanke. Daraus kann geschlossen werden, dass die übrigen Abschnitte der Radprofile eine beliebige Form haben können, vorausgesetzt, dass sie sich nicht überschneiden. Diese Tatsache ermöglicht es, das Fertigungsverfahren der Räder bedeutend zu vereinfachen und zu verbilligen, denn eine Hochpräzisionsbearbeitung muss nur an den Abschnitten mit kleiner Fläche durchgeführt werden.

Wir haben ein Beispiel der Erfindung für die Außenverzahnung erörtert. Es sei bemerkt, dass eine Innenverzahnung der Stirnräder auf eine ähnliche Weise gebildet wird. Das kleinere Rad dieser Verzahnung kann genauso wie in Fig. 1 sein. Die entsprechenden Profile des größeren Rades sind auf der inneren Zylinderfläche ausgebildet.

Alle oben angeführten Gedankengänge stimmen auch für ein Zahnstangengetriebe, dessen Rad als das kleinere Rad ausgebildet ist. Als das zweite wechselwirkende Profil werden die Zähne auf der Leiste dienen. Die Leiste kann hin- und hergehende Bewegungen in einer Ebene ausführen, die senkrecht zur Radachse verläuft. Eine solche Verzahnung kann als Einzelfall der Verzahnung der Räder betrachtet werden, bei der das größere Rad einen endlos großen Radius hat.

Um eine Verzahnung mit Kegelrädern zu betrachten, muss auf die Fig. 6 bis 11 zurückgegriffen werden. Das kleinere Kegelrad 22 hat einen Schraubenzahn 23. Der Schraubenzahn 23 hat eine von der Schraubenoberfläche 24 gebildete Spitze und zwei Arbeitsflanken 25 und 26. Diese Oberflächen sind wie folgt aufgebaut. Der beliebige Hauptschnitt des Kegelrades 22 ist ein beim Schneiden mit einem zusätzlichen Kegel 27 erzeugter Schnitt. Die Arbeitsabschnitte des Schraubenzahns 23 sind in diesem Schnitt (s. Fig. 8) durch Bögen 28 und 29 des Kreises 30 umschrieben. Der Mittelpunkt D des Kreises 30 ist in Bezug auf den Drehpunkt O des Kegelrades 22 um eine Exzentrizität e versetzt. Die außermittigen Kreise haben in den verschiedenen Schnitten des Kegelrades 22 einen unterschiedlichen Radius und eine unterschiedliche Exzentrizität. Die Bögen 28 und 29 bilden Schraubarbeitsflächen als Arbeitsflächen 25 und 26 des Kegelrades 22. Der Bogen 31 des Kreises 30 ist im Bereich der größten Entfernung des Kreises vom Drehpunkt O des Kegelrades 22 abgeschnitten. Die Zahnspitze ist in diesen Schnitten vom Bogen 32 des Kreises 30 gebildet, welcher zum Drehpunkt des Kegelrades 22 koaxial ist. Natürlich wird dieser Kreis 30 in verschiedenen Hauptschnitten des Kegelrades 22 unterschiedliche Radien haben und in axialer Richtung eine Kegelfläche aufbauen.

Diese Bögen 32 bilden auch die Spitze des Schraubenzahns 23 und zwar die Schraubkegelfläche 24. Die Kegelfläche 33 bildet den Fuß vom Schraubenzahn 23 aus. Der Kreis im Schnitt dieser Oberfläche beim Schneiden mit einem zusätzlichen Kegel ist in Fig. 8 mit der Bezugsziffer 34 gekennzeichnet.

Das größere Kegelrad 35 dieser Verzahnung ist in Fig. 9 und 10 abgebildet. Seine Schraubzähne 30 haben Spitzen in Form von Schraubabschnitten der Kegelfläche sowie seitliche Arbeitsschraubabschnitte 37 und 38. Diese Abschnitte im Radschnitt nach dem Schneiden mit einem zusätzlichen Kegel haben die Form von Flanken 39 und 40 einer Zykloide 41 (s. Abwicklung in Fig. 11). Die Spitzen und Zahnlücken der Zykloide 41 sind durch die Bögen der Kreise 42 und 43 ersetzt, die im Raum jeweils Schraubkegelflächen 36 und 44 bilden.

Bei den oben beschriebenen Verzahnungen der Kegelräder haben die Zahnprofile die Form von Kreisbögen und Flankenbögen der Zykloide in den mit zusätzlichen Kegeln gebildeten Querschnitten der Räder. Jedoch gibt es auch ein anderes Verfahren zur Erzeugung der eingreifenden Profile. Fig. 12 zeigt ein Schema zur Darstellung eines anderen Verfahrens zur Bildung der zusammenpassenden Profile der Kegelräder. Hier haben die Zähne des kleineren Rades 1 Arbeitsabschnitte, die von Bögen 45 und 46 eines Kreises 47 gebildet sind. Der Kreis 47 liegt dabei im Schnitt des Rades 1, welcher von einer Kugel 48 mit dem Mittelpunkt E im Schnittpunkt der Räder erzeugt ist. Die Arbeitsabschnitte der Zähne des größeren Rades sind in ähnlicher Weise durch Abschnitte von Flanken 49 und 50 einer Zykloide 51 gebildet, die auf der gleichen Kugel 48 liegt.

Die oben beschriebenen Arten der Verzahnung haben Schraubzähne. Die Verzahnung enthält dabei axiale Teilkräfte. Die Verzahnung der zusammengesetzten Räder hat diesen Mangel nicht. Diese Verzahnung kann am Beispiel einer Außenverzahnung betrachtet werden, deren Räder in Fig. 13 - 17 abgebildet sind. Das kleinere Rad 52 besteht aus fünf zueinander um die gleichen Winkel zugewandten Kränzen 53, 54, 55, 56 und 57. Jeder Kranz im Stirnschnitt (s. Fig. 15) hat einen Zahn, dessen Arbeitsabschnitte von Bögen 58 und 59 eines Kreises 60 gebildet sind (der Kreis ist in Fig. 15 mit Strichlinien gekennzeichnet). Der Mittelpunkt C des Kreises 60 ist in Bezug auf den Drehpunkt O des Rades 52 um eine Exzentrizität e versetzt. Der von der Raddrehachse am weitesten entfernte Teil 61 dieses Kreises 60 ist entfernt. Die Zahnspitze ist vom Bogen 62 des Kreises 60 mit dem größten Radius gebildet. Die Lücke am Zahnfuß ist vom Bogen des Kreises 63 gebildet, der im Umfang eine Zylinderoberfläche 64 ausbildet. Die Zylinderoberfläche 64 stellt dabei den Körper des Rades 52 dar.

Das größere zusammengesetzte Rad 65 (s. Fig. 16 und 17) ist ebenfalls aus fünf Kränzen 66, 67, 68, 69 und 70 zusammengebaut, die in Bezug aufeinander um gleiche Winkel verdreht sind. Die Zähne jedes dieser Kränze im Stirnschnitt haben Arbeitsabschnitte 71 und 72, die Abschnitte der Flanken der Zykloide 73 sind. Die Spitzen und die Zahnlücken der Zykloide 73 sind durch die Bögen der Kreise 74 und 75 begrenzt, die die Spitze 76 des Zahns und die Lücke 77 zwischen den Zähnen bilden. Es ist klar, dass die Lücke 77 zwischen den Radzähnen größenmäßig der Spitze 62 des kleineren Rades 52 entsprechen muss, damit sie während der Arbeit einander nicht berühren. Dementsprechend muss die Spitze 76 der Zykloidzähne des größeren Rades 65 der Lücke 63 am Zahnfuß des kleineren Rades 52 entsprechen.

Die zusammengesetzten Zahnprofile gemäß der Erfindung können auch für die Ausführung eines Zahnstangengetriebes verwendet werden (in den Figuren nicht abgebildet). Das Rad des Zahnstangengetriebes wird mit dem kleineren Rad aus Fig. 13 identisch sein. Die Zahnstange kann als das größere Rad mit einem endlos großen Radius dargestellt werden. Die Aufbaugrundsätze des Zahnprofils bleiben unverändert.

Es ist somit ersichtlich, dass alle Ausgestaltungen dieser Erfindung sich vom Prototyp nur durch die modifizierte Zahnform unterscheiden. Diese Modifikation ist für das größere Rad mit Zykloidverzahnung von großer Bedeutung. Die zykloide Form ist nur den seitlichen Arbeitsabschnitten der Zähne eigen. Die Zahnspitzen und die Zahnlücken können eine beliebige Form aufweisen. Das vereinfacht das Fertigungsverfahren beachtlich und vermindert den Arbeitsaufwand beim Schneiden der Zähne. Das liegt daran, dass die Oberfläche, die eine hochpräzise Qualitätsbearbeitung voraussetzt, beachtlich kleiner ist.

Die Vereinfachung des Fertigungsverfahrens lässt sich besonders gut bei zusammengesetzten Zahnrädern erkennen. Die Räder mit zusammengesetzten Zykloidzähnen gemäß dem Prototyp können anhand zweier Verfahren hergestellt werden. Nach einem dieser Verfahren wird jeder Kranz getrennt ausgebildet. Danach werden die Kränze in Bezug aufeinander gedreht und fest miteinander verbunden. Ein solches Fertigungsverfahren hat eine geringe Genauigkeit, denn während der Verbindung können die Kränze verschoben und verformt werden. Gemäß dem zweiten Verfahren werden alle Kränze aus einem Werkstück gefertigt. Jedoch entsteht in diesem Fall ein herstellungstechnischer Spalt zwischen den Kränzen. Das vergrößert die axialen Abmessungen des Getriebes. Wenn die Räder gemäß der Erfindung ausgebildet werden, bietet sich die Möglichkeit, alle Kränze aus einem Vollwerkstück ohne herstellungstechnische Spalte, und zwar mit Hilfe eines Fingerfräsers, anzufertigen.

Die Funktionsweise der vorgeschlagenen Verzahnung ist der des Prototyps ganz ähnlich. Die Funktionsweise kann am Beispiel der Außenverzahnung der Stirnräder aus Fig. 1 und 4 betrachtet werden. Der Stirnschnitt der zusammenwirkenden Räder ist in Fig. 19 abgebildet. Die Kennzeichnung in dieser Figur ist der aus der Fig. 1 bis 5 gleich. Beim Drehen des kleineren Rades 1 um die Achse OO1 kommt der Bogen 7 des exzentrischen Kreises 8 im Stirnschnitt mit dem Abschnitt der Zykloidflanke des größeren Rades 12 in Kontakt. Es sei angenommen, dass das Rad 1 sich entgegen dem Uhrzeigersinn dreht, wie es in der Figur dargestellt ist. Der Bogen vom Kreis 8 fängt an, beim Drehen um den Mittelpunkt O den Zahn zu drücken und bedingt damit die Umdrehung des größeren Rades 12 in der Gegenrichtung. Bei einer weiteren Umdrehung wird der Zahn des Rades 1 in diesem Schnitt außer Krafteingriff kommen. Wenn aber der axiale Überschneidungswinkel des Rades 1 180 Grad oder mehr beträgt, dann wird es immer einen weiteren solchen Schnitt geben, bei dem der Zahn des Rades 1 in Eingriff mit dem Zykloidabschnitt des Radprofils 12 kommt. Das bedeutet, dass die Umdrehung des Rades 12 ununterbrochen ist, und dass das Rad 12 pro eine Umdrehung des Rades 1 sich um einen Zahn dreht. D. h. die Übersetzung der Verzahnung ist mit der Anzahl der Zähne des größeren Rades gleich, und die Räder arbeiten im Gegenlauf.

## Patentansprüche

1. Exzenter-Zykloidenverzahnung von Zahnprofilen mit Kurvenzähnen, wobei eines der Profile (1) als Schraubenzahn (2) ausgebildet ist,
**dadurch gekennzeichnet,**
**dass** der Arbeitsteil des Zahns (2) in seinen Hauptschnitten von den Bögen (6, 7) eines Kreises umschrieben ist, der in Bezug auf seine Drehachse (OO1) exzentrisch (e) versetzt ist, und
**dass** die Arbeitsgegenfläche der Zähne (13) des zweiten Profils (12) im Hauptschnitt durch Abschnitte der Flanken (14, 15) einer Zykloide (16) umschrieben ist.

2. Exzenter-Zykloidenverzahnung der Kegelzahnräder (22, 35) mit Kurvenzähnen, wobei das kleinere Zahnrad (22) mit einem Schraubenzahn (23) ausgebildet ist,
**dadurch gekennzeichnet,**
**dass** die Arbeitsabschnitte des Schraubenzahns (23) in seinen mit einer Sphäre erzeugten Schnitten von den Bögen (28, 29) des Kreises (30) umschrieben ist, der in Bezug auf die Drehachse (0) exzentrisch (e) versetzt ist, wobei der Mittelpunkt (D) der Schnitte mit dem Schnittpunkt der Radachsen zusammenfällt und dass die Arbeitsgegenfläche (37, 38) der Schraubzähne (36) des zweiten Profils (35) in den mit gleicher Sphäre erzeugten Schnitten durch die Abschnitte der Flanken (39, 40) einer Zykloide (41) umschrieben ist.

3. Exzenter-Zykloidenverzahnung mit zusammengesetzten Zahnprofilen, wobei jedes der Profile (52, 65) in Form von einem Paket mit wenigstens drei Zahnkränzen (53, 54, 55, 56, 57 bzw. 66, 67, 68, 69, 70) ausgebildet ist, die fest miteinander verbunden sind und um einen gleichen Winkel (e) zueinander verdreht sind, und wobei die Kränze (53, 54, 55, 56, 57) des ersten Profils einen Schraubzahn aufweisen,
**dadurch gekennzeichnet,**
**dass** der Arbeitsteil des Zahns des ersten Profils (52) im Stirnschnitt von den Bögen (58, 59) des Kreises (60) umschrieben ist, der in Bezug auf die Radachse (0) exzentrisch (e) versetzt ist, und
**dass** die Arbeitsgegenfläche der Zähne des zweiten Profils (65) im Stirnschnitt durch die Abschnitte (71, 72) der Flanken einer Zykloide (73) umschrieben ist.
